# EUROPEAN PATENT APPLICATION

(11) **EP 1 704 916 A1**
(43) Date of publication of application: **27.09.2006**
(21) Application number: 05388027.4
(22) Date of filing: 23.03.2005
(51) Int. Cl.: B01J 19/32, C02F 3/10, B29C 47/12, B29C 47/24, B29C 47/26, B29C 47/38, B29C 47/82, B29C 47/88

(54) **A contact filter block and a method and an apparatus for producing tubular elements of a contact filter block**

(71) Applicant: Expo-Net Danmark A/S, 9800 Hjorring (DK)
(72) Inventor: Klinkby, John, 9800 Hjørring (DK)
(74) Representative: Nielsen, Henrik Sten

(57) **Abstract**

A method of producing tubular elements of a contact filter block using an apparatus comprising: a reservoir (18) for storing granulate material, said reservoir having a first inlet and a second inlet, said granulate material including a foaming additive having a melting point higher than the melting point of said granulate material, a heating and pressurising unit (20) including a chamber having a second inlet and a second outlet, said second inlet in communication with said first outlet, a path of travel defined from said second inlet to said second outlet, said heating unit comprising heating and pressurising elements distributed along said path of travel, an extruder unit (14) mounted downstream relative to said heating and pressurising unit at said second outlet, said extruder unit further including an extruder heating unit, said extruder defining an extruder outlet (36), said extruder unit generating a mesh-type tubular structure (34), a cooling unit mounted at said extruder unit for rapidly cooling said granulate material, and a measuring and cutting device (40) for measuring and cutting elements having a predetermined length within a specific interval the method comprising the steps of: supplying said granulate material to said heating and pressurising unit from said reservoir via said second inlet, conveying said granulate material along said path of travel, heating said granulate material to a temperature at or below the melting point of said granulate material and pressurising said granulate material to an elevated pressure while conveying said granulate material along said path in said heating and pressurising unit, said heating and pressurising performed according to a specific heating and pressurising profile, transferring said heated and pressurised granulate material to said extruder unit, heating said granulate material within said extruder heating unit to a temperature above said melting point of said granulate material and/or at or above said melting point of said foaming additive, extruding said mesh-type tubular structure from said granulate material, said heating of said granulate material causing an expansion of said foaming additive causing said mesh-type tubular structure to obtain an porous structure, cooling said extruded tubular element by said cooling unit according to a specific cooling profile thereby stopping or halting expansion of said granulate material and/or said foaming additive and locking or fixating said porous structure of said tubular element, and cutting said tubular elements using said measuring and cutting unit.

## Description

The present invention relates to a method of producing tubular elements of a contact filter block, a contact filter block obtained by the method and an apparatus for producing tubular elements of a contact filter block using the method.

Related techniques have been described in publications such as US 2004/0022973, US 5,015,123, US 5,882,510, US 6,217,800, US 6,333,088, US 6,342,158, US 6,551,818 and KR 9611746. Reference is made to the above mentioned patent publications all of which are hereby incorporated in the present specification by reference in their entirety for all purposes.

A first aspect of the present invention relates to a method of producing tubular elements of a contact filter block using an apparatus that comprises:
a reservoir for storing granulate material, the reservoir having a first inlet and a second inlet, the granulate material including a foaming additive having a melting point higher than the melting point of the granulate material,
a heating and pressurising unit including a chamber having a second inlet and a second outlet, the second inlet in communication with the first outlet, a path of travel defined from the second inlet to the second outlet, the heating unit comprising heating and pressurising elements distributed along the path of travel,
an extruder unit mounted downstream relative to the heating and pressurising unit at the second outlet, the extruder unit further including an extruder heating unit, the extruder defining an extruder outlet, the extruder unit generating a mesh-type tubular structure,
a cooling unit mounted at the extruder unit for cooling the granulate material, and
a measuring and cutting device for measuring and cutting elements having a predetermined length within a specific interval
the method comprising the steps of:
   supplying the granulate material to the heating and pressurising unit from the reservoir via the second inlet,
   conveying the granulate material along the path of travel,
   heating the granulate material to a temperature at or below the melting point of the granulate material and pressurising the granulate material to an elevated pressure while conveying the granulate material along the path in the heating and pressurising unit, the heating and pressurising performed according to a specific heating and pressurising profile,
   transferring the heated and pressurised granulate material to the extruder unit,
   heating the granulate material within the extruder heating unit to a temperature above the melting point of the granulate material and/or at or above the melting point of the foaming additive,
   extruding the mesh-type tubular structure from the granulate material, the heating of the granulate material causing an expansion of the foaming additive causing the mesh-type tubular structure to obtain an porous structure,
   cooling the extruded tubular element by the cooling unit according to a specific cooling profile thereby stopping or halting expansion of the granulate material and/or the foaming additive and locking or fixating the porous structure of the tubular element, and
   cutting the tubular elements using the measuring and cutting unit.

The primary use of the tubular elements produced according to the first aspect of the present invention is as elements in a filter block. The method is primarily directed towards the advantageous properties of the tubular elements, namely the enlarged surface originating from the release of the foaming additive. The increase in surface area is contemplated to be 50% to 100% compared to tubular elements produced according to traditional production methods.

Additionally, the method is contemplated to reduce the amount of material used for producing the tubular elements by 1% to 10%, as other production methods for producing elements having a large surface requires larger amounts of material.

The large surface of the tubular elements is contemplated to provide space for one, two or more colonies of bacteria, of aerobic and/or anaerobic types. The combination of aerobic and anaerobic bacteria is contemplated to ensure an advantageous rate of decomposition of waste or biological material in water. Also, the tubular elements are contemplated to ensure that a large amount of bacteria will grow on the tubular elements within a short period of time, such as within two weeks. It is contemplated that anaerobic bacteria will grow at, around or near the joints of the mesh-type structure and aerobic bacteria will grow at or on the parts between the joints.

The reservoir may be constituted by a simple funnel into which a granulate material is poured automatically, semi-automatically or manually. Alternatively, the reservoir may be a tank or the like, for continuously supplying granulate material to the apparatus. The reservoir may have at least two inlets and/or outlets for refilling the reservoir and for delivering the granulate material to the apparatus.

The heating and pressurising unit receives the granulate material from the reservoir and heats and pressurises the granulate material. The granulate material is heated up to but preferably not beyond the melting point of the granulate material. In alternative embodiments, the granulate material may be heated above or beyond the melting point.

The pressure to which the granulate material is pressurised is preferably within the interval 25 to 5000 bar, such as 50 to 1000, such as 60 to 900 bar, such as 65 to 850 bar, such as 75 to 750 bar, such as 100 to 650 bar, such as 150 to 600 bar, such as 200 to 500 bar, such as 275 to 450 bar, such as 300 to 400 bar, such as 325 to 375 bar, such as 25 to 45 bar, such as 45 to 75 bar, such as 75 to 150 bar, such as 150 to 200 bar, such as 200 to 275 bar, such as 275 to 340 bar, such as 340 to 375 bar, such as 375 to 425 bar, such as 425 to 500 bar, such as 500 to 550 bar, such as 550 to 625 bar, such as 625 to 700 bar, such as 700 to 775 bar, such as 775 to 850 bar, such as 850 to 1000 bar, preferably around 350 bar.

The extruder heating unit provides an additional heating of the material. When the extruder heating unit heats the material, the foaming additive is contemplated to reach its foaming state and cause an expansion or creation of bubbles in the material, thereby creating a porous structure in the material.

In alternative embodiments, the extruder heating unit may be omitted, and the heating and pressurising unit may provide the needed heat for the foaming additive to expand.

For ensuring that the porous structure in the material is fixed or not changed, a cooling unit is provided. The cooling unit cools the material after it exits the extruder unit which is contemplated to stop the expansion of the foaming additive. The cooling may be obtained by using water, air, any fluid or liquid.

The extruder unit extrudes the tubular elements from the heated material. In the presently preferred embodiment of the present invention, the extruder unit includes two oppositely rotating extruder heads or two parallel moving extruder heads, and the extruder heads defines the extruder outlet. Further, the extruder unit may include a multitude of nozzles each defining a cross-section having a substantially square, round, semi-round, rectangular, oblong, triangular, semi-hyperbolic, trapeze, inverse trapeze shaped or any combinations thereof, preferably round. In the present context, the term nozzle is used for describing the outlets of the extruder.

The measuring and cutting device is used for measuring and cutting the tubular elements into a predetermined length within a specific interval, i.e. the resulting elements may have an overall dimension with a measurement uncertainty. The measurements may be performed by machine visual inspection, mechanical determination of the length of the elements or any other automatic or semiautomatic methods or techniques.

In performing the method according to the first aspect of the present invention, the granulate material is supplied from the reservoir into the heating and pressurising unit. The heating and pressurising unit has an inlet through which the granulate material is supplied. The inlet may be in fluid communication with the reservoir.

The granulate material is conveyed along the path of travel defined in the heating and pressurising unit while heating units heat the granulate material. The heating is performed according to a specific heating profile.

In a first instance the heating elements may emit the same amount of heat at all positions along the path of travel, i.e. the same number of watts is emitted from all elements. In a second instance the heating element or elements may emit an increasing or decreasing amount of heat along the path of travel to ensure that the temperature of the granulate material is near the melting point at the outlet of the heating and pressurising unit. In a third instance, the specific heating profile may include one or more peaks along the path of travel, such as short and/or longer bursts of heat emitted from the heating elements or element. The peaks may be substantially equal or in the alternative different, both in terms of amount and width/duration, further alternatively, a combination of two or more substantially equal peaks and one or more peaks different from the two.

Further, the speed of which the granulate material is conveyed along the path of travel may be adapted to ensure that the temperature of the granulate material is near or at the melting point at the outlet of the heating and pressurising unit.

The heating and pressurising unit may also increase or decrease the pressure of the granulate material as it is conveyed from the inlet to the outlet of the heating and pressurising unit. The change in pressure may be performed according to a specific pressurising profile.

From the outlet of the heating and pressurising unit the material may be transferred to an extruder unit or the like.

After the material has been extruded, the extruder heating unit may provide extra heat for heating and thereby causing the foaming additive to expand and thereby create a porous structure in the material. The cooling unit cools the material to a temperature below the temperature at which the foaming additive expands.

The granulate material used in the method according to the first aspect of the present invention is preferably HDPE. Further, the granulate material may further include an amount of PP or LDPE or a combination thereof.

According to the teachings of the present invention, the weight of the foaming additive may constitute 0,1 % to 50%, such as 1% to 40%, such as 5% to 35%, such as 8% to 20%, such as 9% to 12%, such as 0,1% to 5%, such as 5% to 15%, such as 15% to 25%, such as 25% to 35%, such as 35% to 45%, such as 45% to 50%, preferably 10% of the weight of the granulate material.

According to the basic realisation of the method according to the present invention, the granulate material may be heated to 140 to 240 degrees centigrade.

Additionally, the granulate material may further include a colouring additive, such as green, black or any other colour.

Particularly, the method according to the first aspect of the present invention may further comprise providing a feed screw in the path of travel, the feed screw defining a cylindrical or conical geometry. The feed screw may then constitute a conveyor for conveying the material from the inlet of the heating and pressurising unit to the output thereof. The geometrical structure of the feed screw may perform the pressurising of the material as it is conveyed along the path of travel.

A second aspect of the present invention relates to a contact filter block for the construction of filters for biological treatment of waste water comprising:
a plurality of tubular elements which are joined together each having an mesh-type outside surface, the tubular elements being produced using the method according to the first aspect of the present invention, the tubular elements having a porous structure.

The porous structure of the contact filter block is contemplated to provide a large surface on which a multitude of bacteria may grow. The bacteria are then contemplated to break-down or decompose waste in water flowing through the contact filter block. The contact filter block may be positioned in the ground or in a waste water treatment facility.

In a basic realisation of the contact filter block according to the second aspect of the present invention, the porous structure has a surface of no less than 200 - 300 m2/m3.

As discussed earlier, the large surface area is contemplated to provide space for large amounts of bacteria for decomposing waste and/or biological material in water.

The contact filter block according to the second aspect may be produced by the method according to the first aspect of the present invention.

A third aspect of the present invention relates to a contact filter block for the construction of filters for biological treatment of waste water comprising:
a plurality of tubular elements which are joined together each having an mesh-type outside surface, the tubular elements being produced using the method according to the first aspect, and having a surface roughness within the interval 5 to 1000, such as 7 to 700, such as 10 to 600, such as 25 to 500, such as 50 to 450, such as 75 to 350, such as 100 to 300, such as 150 to 250, such as 7 to 15, such as 15 to 30, such as 30 to 50, such as 50 to 75, such as 75 to 150, such as 150 to 225, such as 225 to 300, such as 300 to 350, such as 350 to 400, such as 400 to 500.

The surface roughness may be further described by the parameters Ra, Rz and Rmax. The surface roughness is measured in µm.

In a preferred embodiment of the present invention, the parameter Ra has a value in the interval 5 to 1000, such as 7 to 700, such as 10 to 600, such as 25 to 500, such as 50 to 450, such as 75 to 350, such as 100 to 300, such as 150 to 250, such as 7 to 15, such as 15 to 30, such as 30 to 50, such as 50 to 75, such as 75 to 150, such as 150 to 225, such as 225 to 300, such as 300 to 350, such as 350 to 400, such as 400 to 500.

In a preferred embodiment of the present invention, the parameter Rz has a value in the interval 5 to 4000, such as 20 to 2000, such as 25 to 1800, such as 40 to 1500, such as 75 to 1300, such as 125 to 1200, such as 200 to 1100, such as 275 to 1000, such as 350 to 850, such as 400 to 700, such as 450 to 600, such as 500 to 550, such as 20 to 50, such as 50 to 100, such as 100 to 150, such as 150 to 225, such as 225 to 300, such as 300 to 375, such as 375 to 450, such as 450 to 550, such as 550 to 675, such as 675 to 775, such as 775 to 850, such as 850 to 950, such as 950 to 1100, such as 1100 to 1250, such as 1250 to 1400, such as 1400 to 1600, such as 1600 to 1800, such as 1800 to 2000.

In a preferred embodiment of the present invention, the parameter Rmax has a value in the interval 5 to 5000, such as 30 to 3000, such as 40 to 2800, such as 50 to 2600, such as 75 to 2400, such as 150 to 2200, such as 200 to 2000, such as 275 to 1800, such as 375 to 1700, such as 450 to 1550, such as 550 to 1400, such as 650 to 1200, such as 775 to 1000, such as 850 to 950, such as 30 to 40, such as 40 to 50, such as 50 to 75, such as 75 to 100, such as 100 to 175, such as 175 to 275, such as 275 to 350, such as 350 to 475, such as 475 to 575, such as 575 to 700, such as 700 to 900, such as 900 to 1200, such as 1200 to 1500, such as 1500 to 1800, such as 1800 to 2000, such as 2000 to 2300, such as 2300 to 2600, such as 2600 to 2800, such as 2800 to 3000.

The tubular elements of the contact filter block according to the third aspect of the present invention may be obtained according to the method defined in the first aspect of the present invention, and may include the features of the contact filter block according to the second aspect.

A fourth aspect of the present invention relates to an apparatus for producing tubular elements of a contact filter block, the apparatus comprising:
a reservoir for storing granulate material, the reservoir having a first inlet and a second inlet, the granulate material including a foaming additive having a melting point higher than the melting point of the granulate material,
a heating and pressurising unit including a chamber having a second inlet and a second outlet, the second inlet in communication with the first outlet, a path of travel defined from the second inlet to the second outlet, the heating unit comprising heating and pressurising elements distributed along the path of travel,
an extruder unit mounted downstream relative to the heating and pressurising unit at the second outlet, the extruder unit further including an extruder heating unit, the extruder unit including two oppositely rotating extruder heads defining an extruder outlet, the extruder unit generating a mesh-type tubular structure,
a cooling unit mounted at the extruder unit for rapidly cooling the granulate material, and
   a measuring and cutting device for measuring and cutting elements having a predetermined length within a specific interval.

The apparatus according to the fourth aspect may be used for performing the method according to the first aspect for the production of contact filter blocks according to the second and/or third aspect of the present invention.

The first, second, third and fourth aspects are to be further described with reference to the attached drawings in which:

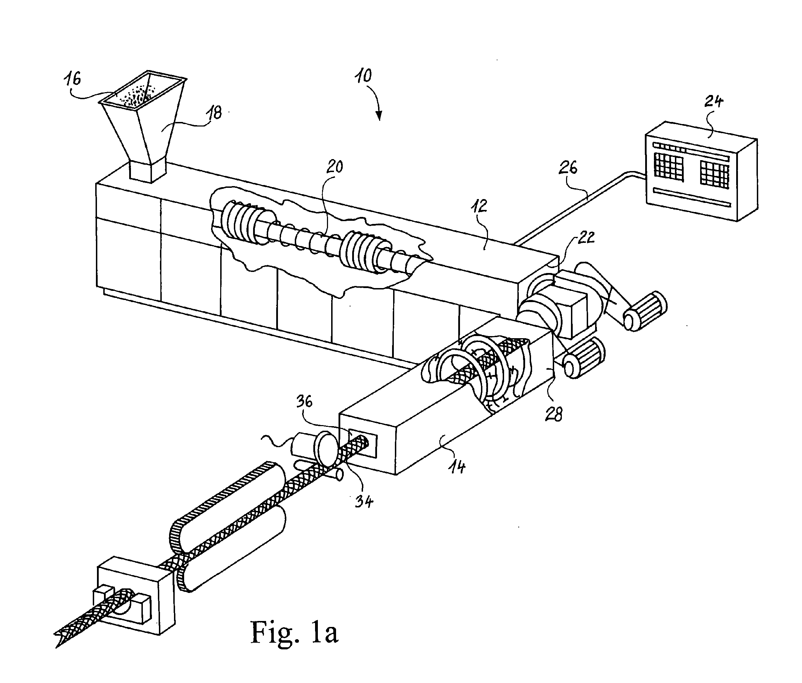

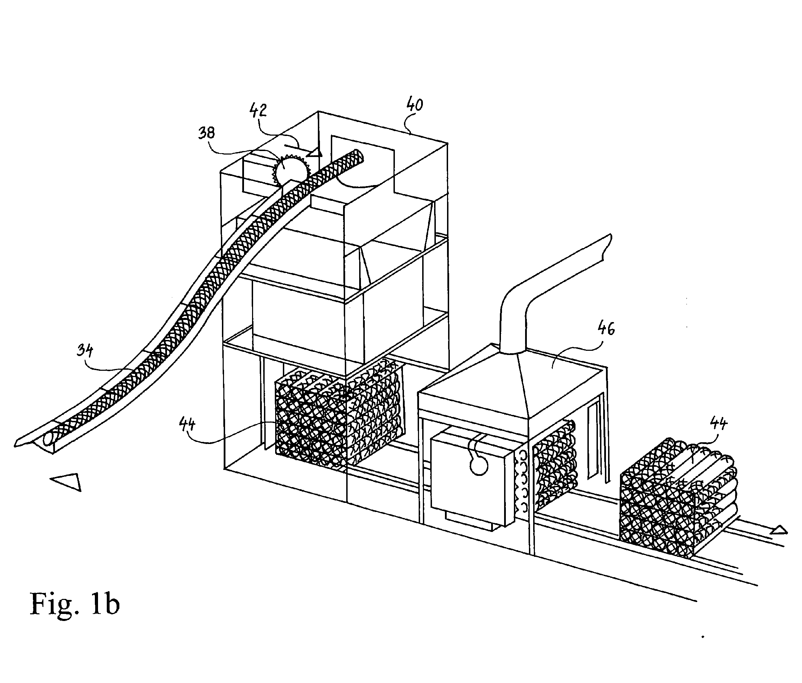

Fig. 1 a is a schematic illustration of an apparatus for producing tubular elements,
Fig. 1 b is a schematic illustration of an apparatus for processing elements,
Fig. 2 is a schematic illustration of a part of an extruder unit,
Fig. 3 is a schematic illustration of the extruder unit of fig. 2,
Fig. 4 is schematic illustrations of alternative embodiments of extruder unit outlets,
Fig. 5 is a schematic illustration of a plurality of tubular elements connected in a block, and
Fig. 6 is a zoomed schematic illustration of a part of a tubular element.

Fig. 1 a is a schematic illustration of an apparatus 10 for producing tubular elements. The apparatus 10 comprises a first section 12 and a second section 14. The first section 12 receives granulate material 16 via an inlet 18 constituted by a funnel. Alternatively, the inlet 18 may be in contact with a larger reservoir for continuously supplying granulate material 16 to the apparatus 10. The granulate material comprises a foaming additive that, when heated above a certain temperature, expands and thereby creates bobbles in the melted or soft granulate material. When the foaming additive expands the granulate material is probably not granulate any more, but a soft mass.

The first section 12 receives the granulate material which is then fed to a screw conveyor 20 defining an axis or path of travel along which the granulate material is transported. The screw conveyor 20 is positioned in the first section 12.

Along the path of travel defined by the screw conveyor 20, a number of heating elements, alternatively a single heating element, is distributed. The heating element or elements, not illustrated in Fig. 1a, heats the granulate material 16 while it is conveyed by the screw conveyor from the inlet of the first section 12 to an outlet 22 of the first section.

The granulate material 16 is heated to a temperature just below the melting point of the granulate material 16. In the presently preferred embodiment of the present invention, the screw conveyor 20 compresses the granulate material as it is conveyed along the path of travel.

The heating of the granulate material 16 is performed according to a specific heating profile. In one instance the heating elements may emit the same amount of heat at all positions along the path of travel and the speed of which the screw conveyor 20 conveys the granulate material 16 may be adapted to ensure that the temperature of the granulate material is near the melting point at the outlet 22.

In a second instance the heating element or elements may emit an increasing or decreasing amount of heat along the path of travel to ensure that the temperature of the granulate material 16 is near the melting point at the outlet 22.

Thirdly, the specific heating profile may include one or more peaks along the path of travel, such as short or long bursts of heat emitting from the heating elements or element. The peaks may be substantially equal, both in terms of amount and width/duration.

The screw conveyor 20 may be formed as a simple screw having a substantially constant diameter or height. In the alternative the screw conveyor 20 may be formed as a screw conveyor with gradually increasing or decreasing height so that the granulate material 16 is further compresses due to the gradually reduced size or space. In the embodiment where the screw conveyor 20 has a substantially constant height along the path of travel, the granulate material 16 may still be compressed, e.g. by the "new" or cold granulate material pushing the "old" or hot granulate material 16 located nearer the outlet 22 of the first section.

The operation of the heating elements and/or the screw conveyor is controlled by an external unit 24, e.g. a computer or specialised hardware and/or software monitoring the operation of the screw conveyor and/or the heating elements by receiving information regarding the number of revolutions per second of the screw conveyor and temperature information e.g. via sensors located inside the first section 12. The unit 24 may ensure that the temperature of the heating elements and/or the material is within predetermined ranges.

In Fig. 1 a, the unit 24 is connected to the first section 12 via a cable 26 for transferring information and control signals back and forth between the unit 24 and the first section 12. Alternatively, the cable or wire 26 may be constituted by other links such as RF, IR, HF or other wireless transfer techniques.

From the outlet 22 of the first section 12, the heated and near-melted granulate material is transferred into the second section via an inlet 28. The material is fed to an extruder unit 30 including an additional heater unit, not illustrated, for heating the material above its melting point. As the material includes a foaming additive that is released above a certain temperature, the foaming material will enter a gaseous state thereby creating a porous structure in the material. The expansion or transfer of the foaming additive into gas is preferably done after the material has passed though the extruder unit 30.

To ensure that the porous structure is fixed, a cooling unit cools the material shortly after the porous structure has been established.

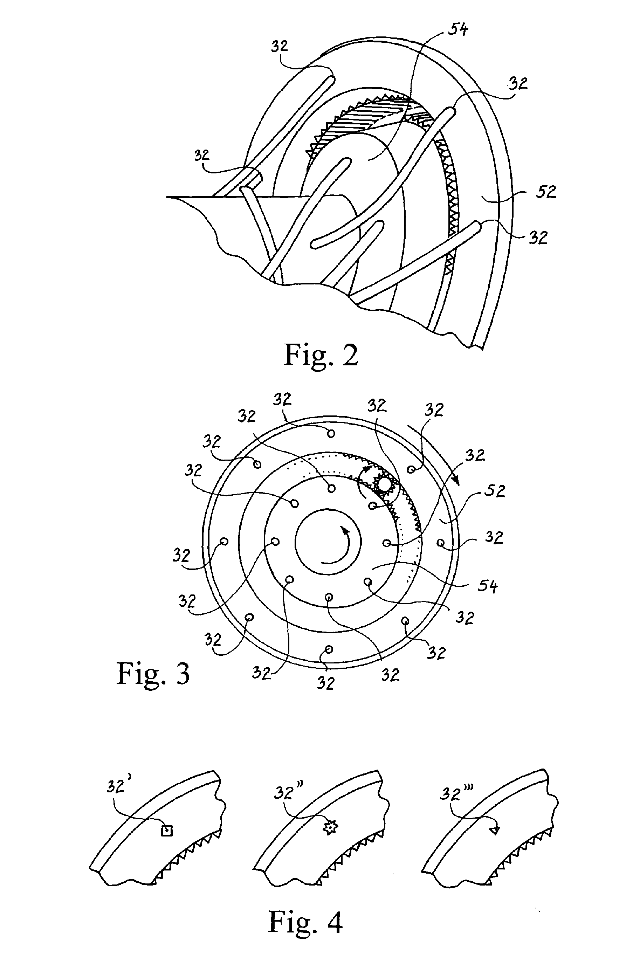

In the presently preferred embodiment of the present invention, the extruder unit 30 is constituted by two oppositely rotating parts illustrated in greater details in Figs. 2, 3 and 4.

As seen from Fig. 2, the extruded material exits the extruder unit at extruder outlets 32 distributed in a circle. The distribution of the extruder outlets 32 ensures along with the rotation of the extruder heads 52 and 54 that the resulting structure is a tubular mesh-type structure.

Returning to Fig. 1a, the tubular mesh-structure 34 exits the second section 14 via the outlet 36. The tubular mesh-structure 34 will be further processed as illustrated in Fig. 1 b, where the tubular mesh-structure 34 is cut into smaller pieces using a cutting wheel located in a tower 40, the cutting wheel being mounted on a reciprocating arm moving in direction of the arrow 42. The tubular mesh-structure 34 is cut into smaller pieces that may be assembled in larger structures such as 44 which is a structure comprising 25 short pieces of the tubular mesh-structure 34. The 25 individual pieces of the tubular mesh-structure is then transferred into a heater unit 46 melting the ends of the pieces of the tubular mesh-structure so that the individual pieces are assembled and/or locked in a fixed structure which may then be used for purposes such as cleaning water, such as waste water.

Fig. 3 schematically illustrates an extruder comprising two extruder heads 52 and 54. The extruder heads 52 and 54 are two oppositely rotating circular heads. In other embodiments, the extruder unit may comprise two or more parallel moving parts, two parts moving or rotating in the same direction, or parts not moving or rotating themselves.

In Fig. 4, three alternative geometrical configurations of the extruder outlets are illustrated, referenced 32', 32", 32"', respectively. In the presently preferred embodiment of the present invention, the extruder outlets 32 define a substantially circular geometrical cross section, however, as illustrated in Fig. 4, the extruder outlets may define a substantially square 32', star-shaped 32", triangular 32"' or any polygon configurations such as elliptical, rectangular, truncated pyramidal, inverse truncated pyramidal, hexagonal, pentagonal or any combinations thereof.

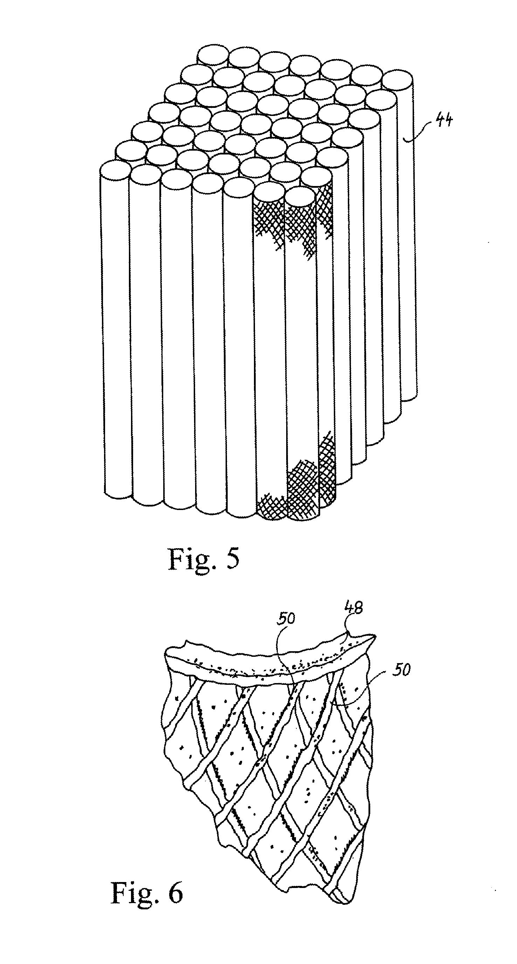

Fig. 5 is a schematic illustration of an assembly of pieces of the tubular mesh-structure 34, assembled into a simple structure 44. The individual mesh-structure elements are joined together at the ends of the structures, however embodiments wherein the elements are joined together at other locations along the longitudinal axis the elements may be envisioned as well as embodiments where the elements are joined at the entire lengths of the elements.

Fig. 6 is a schematic closer view of an element 48 illustrating the expanded surface of the threads 50 constituting the mesh-structure of the tubular element 48. The threads 50 have an expanded surface due to the manufacturing process as described in relation to Fig. 1 wherein the foaming additives release a gas creating bubbles in the material. The enlarges surface is contemplated to allow a great or large amount of bacteria to grow on the structure or thread, e.g. the bacteria located nearest the thread 50 will be covered by other bacteria thereby allowing substantially only anaerobic bacteria to grow on the thread 50 itself.

The combination of anaerobic and aerobic bacteria is contemplated to provide an improved cleaning effect on wastewater, as they each digest or decompose different types of waste.

## Claims

1. A method of producing tubular elements of a contact filter block using an apparatus comprising:
a reservoir for storing granulate material, said reservoir having a first inlet and a second inlet, said granulate material including a foaming additive having a melting point higher than the melting point of said granulate material,
a heating and pressurising unit including a chamber having a second inlet and a second outlet, said second inlet in communication with said first outlet, a path of travel defined from said second inlet to said second outlet, said heating unit comprising heating and pressurising elements distributed along said path of travel,
an extruder unit mounted downstream relative to said heating and pressurising unit at said second outlet, said extruder unit further including an extruder heating unit, said extruder defining an extruder outlet, said extruder unit generating a mesh-type tubular structure,
a cooling unit mounted at said extruder unit for rapidly cooling said granulate material, and
a measuring and cutting device for measuring and cutting elements having a predetermined length within a specific interval
the method comprising the steps of:
supplying said granulate material to said heating and pressurising unit from said reservoir via said second inlet,
conveying said granulate material along said path of travel,
heating said granulate material to a temperature at or below the melting point of said granulate material and pressurising said granulate material to an elevated pressure while conveying said granulate material along said path in said heating and pressurising unit, said heating and pressurising performed according to a specific heating and pressurising profile,
transferring said heated and pressurised granulate material to said extruder unit,
heating said granulate material within said extruder heating unit to a temperature above said melting point of said granulate material and/or at or above said melting point of said foaming additive,
extruding said mesh-type tubular structure from said granulate material, said heating of said granulate material causing an expansion of said foaming additive causing said mesh-type tubular structure to obtain an porous structure,
cooling said extruded tubular element by said cooling unit according to a specific cooling profile thereby stopping or halting expansion of said granulate material and/or said foaming additive and locking or fixating said porous structure of said tubular element, and
cutting said tubular elements using said measuring and cutting unit.

2. The method according to claim 1, wherein said extruder unit includes two oppositely rotating extruder heads or two parallel moving extruder heads,
said extruder heads defining said extruder outlet.

3. The method according to claim 1 or 2, wherein said extruder unit includes a multitude of nozzles each defining a cross-section having a substantially square, round, semi-round, rectangular, oblong, triangular, semi-hyperbolic, trapeze, inverse trapeze or any combinations thereof.

4. The method according to any of the claims 1-3, wherein said granulate material is HDPE.

5. The method according to claim 4 where in said granulate material further includes an amount of PP or LDPE or a combination thereof.

6. The method according to any of the claims 1-5, wherein the weight of said foaming additive constitutes 0,1 to 50 %, such as 1 to 40 %, such as 5 to 35 %, such as 8 to 20 %, such as 9 to 12 %, such as 0,1 to 5 %, such as 5 to 15 %, such as 15 to 25 %, such as 25 to 35 %, such as 35 to 45 %, such as 45 to 50%, preferably 10 % of the weight of the granulate material.

7. The method according to any of the claims 1-6, wherein said granulate material is heated to 140 to 240 degrees centigrade.

8. The method according to any of the claims 1-7 wherein said granulate material further includes a colouring additive.

9. The method according to any of the claims 1-8 further comprising:
providing a feed screw in said path of travel, said feed screw defining a cylindrical or conical geometry.

10. The method according to any of the claims 1-9 wherein said heating and pressurising unit pressurised said granulate material to a pressure within the interval 25 to 5000 bar, such as 50 to 1000, such as 60 to 900 bar, such as 65 to 850 bar, such as 75 to 750 bar, such as 100 to 650 bar, such as 150 to 600 bar, such as 200 to 500 bar, such as 275 to 450 bar, such as 300 to 400 bar, such as 325 to 375 bar, such as 25 to 45 bar, such as 45 to 75 bar, such as 75 to 150 bar, such as 150 to 200 bar, such as 200 to 275 bar, such as 275 to 340 bar, such as 340 to 375 bar, such as 375 to 425 bar, such as 425 to 500 bar, such as 500 to 550 bar, such as 550 to 625 bar, such as 625 to 700 bar, such as 700 to 775 bar, such as 775 to 850 bar, such as 850 to 1000 bar, preferably around 350 bar.

11. A contact filter block for the construction of filters for biological treatment of waste water comprising:
a plurality of tubular elements which are joined together each having an mesh-type outside surface, the tubular elements being produced using the method according to any of the claims 1-10, said tubular elements having a porous structure.

12. The contact filter block according to claim 11 said porous structure having a surface of no less than 200 - 300 m2/m3.

13. A contact filter block for the construction of filters for biological treatment of waste water comprising:
a plurality of tubular elements which are joined together each having an mesh-type outside surface, said tubular elements being produced using the method according to any of the claims 1-10, and having a surface roughness within the interval 5 to 1000, such as 7 to 700, such as 10 to 600, such as 25 to 500, such as 50 to 450, such as 75 to 350, such as 100 to 300, such as 150 to 250, such as 7 to 15, such as 15 to 30, such as 30 to 50, such as 50 to 75, such as 75 to 150, such as 150 to 225, such as 225 to 300, such as 300 to 350, such as 350 to 400, such as 400 to 500.

14. An apparatus for producing tubular elements of a contact filter block, said apparatus comprising:
a reservoir for storing granulate material, said reservoir having a first inlet and a second inlet, said granulate material including a foaming additive having a melting point higher than the melting point of said granulate material,
a heating and pressurising unit including a chamber having a second inlet and a second outlet, said second inlet in communication with said first outlet, a path of travel defined from said second inlet to said second outlet, said heating unit comprising heating and pressurising elements distributed along said path of travel,
an extruder unit mounted downstream relative to said heating and pressurising unit at said second outlet, said extruder unit further including an extruder heating unit, said extruder unit including two oppositely rotating extruder heads defining an extruder outlet, said extruder unit generating a mesh-type tubular structure,
a cooling unit mounted at said extruder unit for rapidly cooling said granulate material, and
a measuring and cutting device for measuring and cutting elements having a predetermined length within a specific interval.
